# EUROPEAN PATENT SPECIFICATION

(11) **EP 1 682 948 B1**
(45) Date of publication and mention of the grant of the patent: **13.06.2012**
(21) Application number: 04796609.8
(22) Date of filing: 26.10.2004
(51) Int. Cl.: B65G 1/04, B65G 43/10, B65G 47/244, B65G 47/22, G05B 15/02

(54) **SYSTEM AND METHOD FOR CONTROLLING LOAD MOTION ACTUATORS**
SYSTEM UND VERFAHREN ZUR STEUERUNG VON LASTBEWEGUNGSAKTOREN
SYSTÈME ET PROCÉDÉ DE COMMANDE D'ACTIONNEURS POUR DÉPLACER DES CHARGES

(30) Priority: 14.11.2003 US 520519 P; 12.05.2004 US 845337
(43) Date of publication of application: 26.07.2006
(73) Proprietor: SIEMENS AKTIENGESELLSCHAFT, 80333 München (DE); Siemens Corporation, Iselin, NJ 08830 (US)
(72) Inventor: WYNBLATT, Michael, Moraga, CA 94556 (US); LUDWIG, Harmut, West Windsor, NJ 08550 (US); WANG, Lingyun, Plainsboro, NJ 08536 (US)
(74) Representative: Göhring, Robert
(86) International application number: PCT/US2004/035764
(87) International publication number: WO 2005/050333

(56) References cited:
- WO-A-00/76887
- US-A- 4 398 720
- US-A- 5 655 667
- US-A- 5 887 699
- US-A- 6 015 039
- PATENT ABSTRACTS OF JAPAN vol. 2003, no. 11, 5 November 2003 (2003-11-05) & JP 2003 200759 A (TOYOTA MOTOR CORP), 15 July 2003 (2003-07-15)

## Description

### BACKGROUND

The present disclosure relates generally to the control of load motion actuators and, more particularly, to the mapping of load motion vectors to control commands for a matrix of actuators. Load transportation systems such as those used in warehouses, package distribution plants, assembly plants, and manufacturing plants are often utilized to move loads from one location to another. These loads are often moved using load motion actuators such as conveyor belts, rollers, robotic arms, or pin-hole air jets.

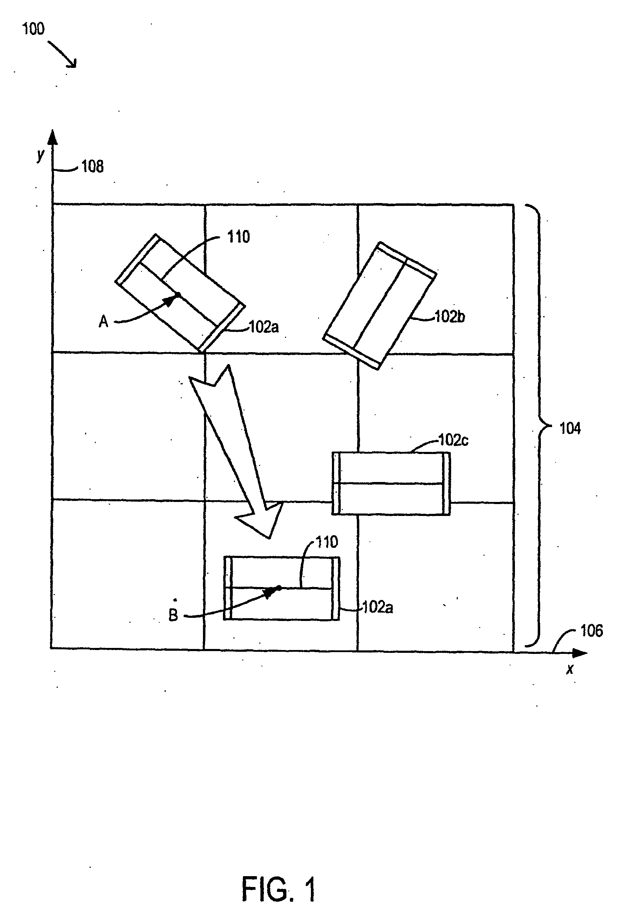

An example of a load transportation system 100 is shown in FIG. 1. The system 100 may comprise, for example, multiple loads 102a-c such as load 102a which may be moved from position A to position B by a group or matrix of actuators 104. For example, the load transportation system 100 may be a set of conveyor belts 104 that are used to convey manufacturing parts from a storage location (position A) to an assembly location (position B) within an assembly line of a factory or other manufacturing facility.

The movements of the loads 102a-c may be described in terms of translational and rotational displacement. For example, a two-dimensional coordinate system having an x-axis 106 and a y-axis 108 may be used to track, locate, or otherwise identify or describe the location of.the loads 102a-c. Any difference in the coordinate position of a given load 102a over time may thus be calculated or represented as a translational displacement (in terms of movement with respect to the axis 106, 108 for example). The rotational displacements of the loads 102a-c may be determined with reference to a centreline, axis or other reference line 110 of the loads 102a-c. For example, the angular relation of the centreline 110 of load 102a with respect to one or more of the axis 106, 108 may be noted over time to determine a change in the rotational orientation of the load 102a.

Currently, load transportation systems must typically be programmed to move a load from one position to another. For example, the load motion actuators must typically be controlled by programming specific speeds and directions for each actuator in the load transportation system. The programmed actuators may then transport a load from one location to another by applying the programmed speeds and directions at pre-programmed times and for pre-programmed durations.

This requires the programmer to be highly skilled in selecting speeds and directions for all of the various actuators in a given load transportation system, and requires many programming hours to configure the system to properly transport a given load. Where multiple loads are transported by the same system, the required speeds and directions of the actuators become increasingly complex for the programmer to determine, and require substantially more programming hours to configure.

An example for a load transportation system according to the state of the art is known for example from US 6,015,039, which discloses a sorting apparatus and a method imperative to selectively discharge articles, such as parcels, from a tilted, gated conveyor to a desired output destination.

Accordingly, there is a need for systems and methods for controlling load motion actuators that address these and other problems found in existing technologies.

### SUMMARY

The invention concerns a system according to claim 1, a method according to claim 4 and a storage medium comprinsing computer code, all three for controlling load motion actuators in load transportation systems.

According to the invention, the system, method and computer code are operable to determine a desired behaviour for a load, the load being moveable by a plurality of load actuators. In some embodiments, the plurality of load actuators may be arranged in a substantially planar matrix. According to the invention, the system, method and computer code are further operable to select a strategy for controlling the plurality of load actuators based at least in part on a score associated with the strategy, and a plurality of strategies for controlling the plurality of load actuators are scored.

According to some embodiments, systems, methods, and computer code are operable to predict a translational and a rotational motion vector of a load that would result from implementation of a strategy, determine a translational difference between the predicted translational motion vector and a desired translational motion vector, and a rotational difference between the predicted rotational motion vector and a desired rotational motion vector, and determine an expected deviation of the load by: (i) multiplying the translational difference by a translational weighting factor, (ii) multiplying the rotational difference by a rotational weighting factor, and (iii) summing the products.

According to some embodiments, systems may include means for scoring a plurality of strategies for controlling a plurality of load actuators, and means for selecting a strategy from the plurality of strategies based at least in part on the score associated with the strategy.

With these and other advantages and features of embodiments that will become hereinafter apparent, embodiments may be more clearly understood by reference to the following detailed description, the appended claims and the drawings attached herein.

### BRIEF DESCRIPTION OF THE DRAWINGS

FIG. 1 is a block diagram of a system for transporting loads;
FIG. 2 is a flowchart of a method according to some embodiments;
FIG. 3 is a block diagram of example actuator control strategies according to some embodiments;
FIG. 4 is a flowchart of a method according to some embodiments;
FIG. 5 is a block diagram of a system according to some embodiments;
FIG. 6 is a flowchart of a method according to some embodiments; and
FIG. 7 is a block diagram of a system according to some embodiments.

### DETAILED DESCRIPTION

Some embodiments described herein are associated with an "actuator", "load actuator", or "load motion actuator". As used herein, the terms "actuator", "load actuator", and "load motion actuator" may be used interchangeably and may generally refer to any devices and/or systems capable of causing, directing, controlling, and/or otherwise contributing to the movement of an object. Examples of actuators may include, but are not limited to, rollers, conveyor belts, pin-hole air jets, motors, servos, cables, valves, magnets, and various robotic devices such as arms, gates, cranes, and hydraulic lifts. In some embodiments, an actuator may be or include an electronic device or component such as a processor, a printed circuit board (PCB), and/or any other type of electrical connection and/or circuit associated with the movement of an object.

Some embodiments described herein are associated with a "matrix", "set", or "group" of actuators. As used herein, the terms "matrix", "set", and "group" may be used interchangeably and generally refer to one or more actuators within a load transportation system. In some embodiments, a matrix of actuators may include a plurality of actuators that are interrelated and/or uniform. For example, as shown in FIG. 1, a grid of multiple adjacent actuators may form a substantially planar surface for moving a load. According to some embodiments, the actions of one actuator of a group of actuators may effect and/or determine an action of one or more other actuators of the group. Groups of actuators may include actuators of a single type and/or configuration or may include multiple and/or varying types and/or configurations of actuators. For example, a matrix of actuators may include both conveyor belts and rollers arranged in a particular manner to effectuate the movement of a load.

Some embodiments described herein are associated with an "overlap" or an "overlap area" associated with an actuator. As used herein, the term "overlap" may generally refer to the condition where a load and/or a portion of a load is located within and/or on an area capable of being effected by a particular actuator. As used for illustrative purposes herein, for example, a load may overlap a conveyor belt actuator when a portion of the load is located on a portion of the conveyor belt. In other words, a conveyor belt is capable of moving a load when any portion of the load is in contact with the conveyor's belt surface. As used herein, the term "overlap area" may generally refer to the contact area between a load and an actuator and/or an actuator's area of influence. With pin-hole air jet actuators, for example, the overlap area may be defined as the surface area of the load that may be acted upon by the jet of air from the actuator (i.e., the portion of the load within the air jet's area of influence).

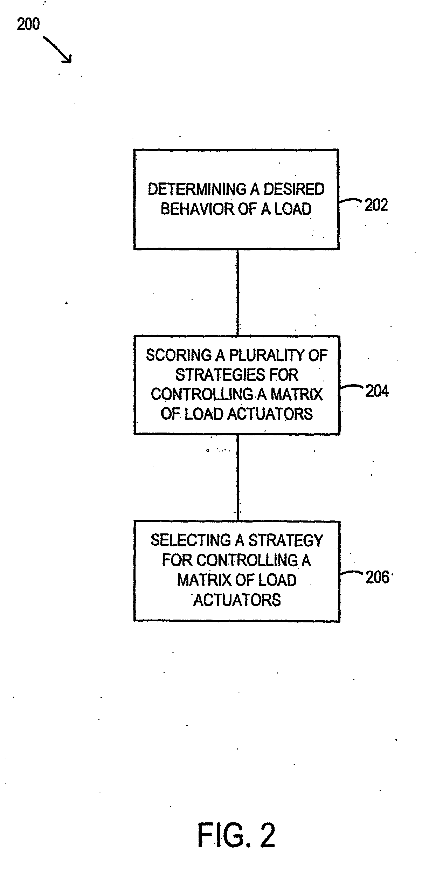

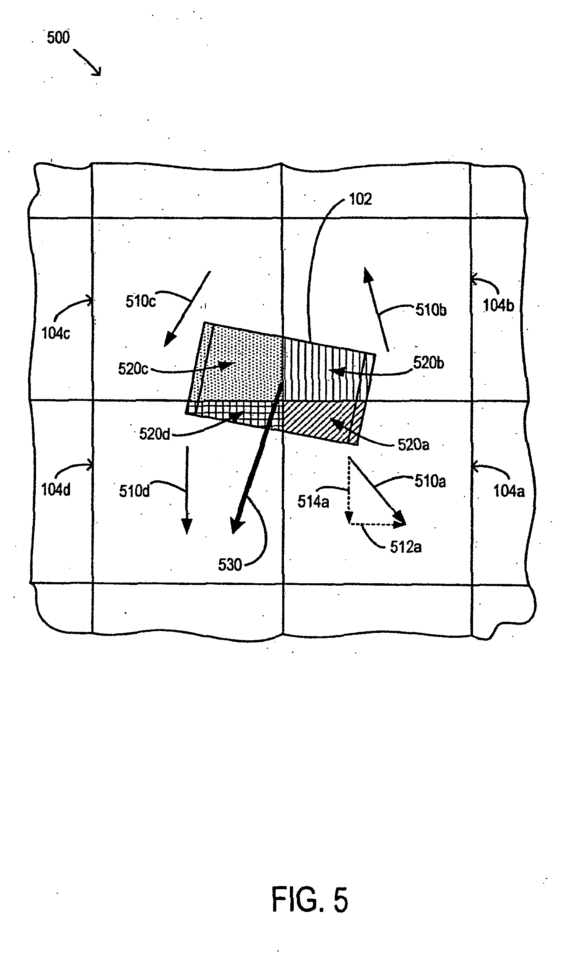

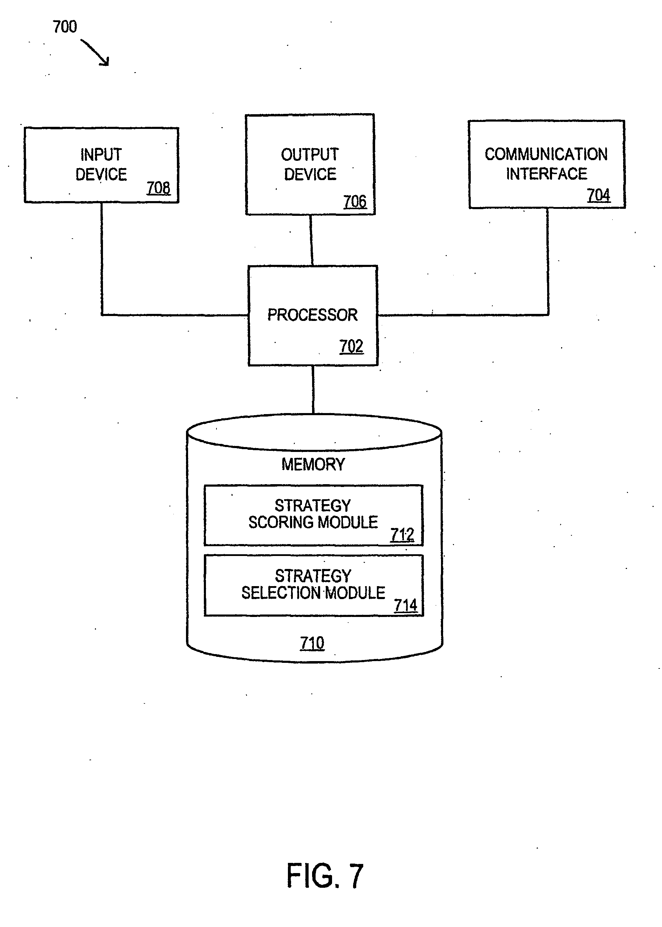

Referring to FIG. 2, a flow diagram of a method 200 for controlling actuators in accordance with some embodiments is shown. The method 200 may be associated with and/or performed by, for example, the systems 500 and/ or 700 (or one or more of the system components) described in conjunction with FIG. 5 and FIG. 7, respectfully herein. The flow diagrams described herein do not necessarily imply a fixed order to the actions, and embodiments may be performed in any order that is practicable. Note that any of the methods described herein may be performed by hardware, software (including microcode), firmware, or any combination thereof. For example, a storage medium may store thereon instructions that when executed by a machine result in performance according to any of the embodiments described herein.

In some embodiments (such as shown in FIG. 2), the method 200 may begin by determining a desired behavior for a load, at 202. For example, the load may be moveable by a plurality of actuators, and a programmer or other entity may desire that the actuators be controlled to move a load from a first location to a second location. In some embodiments, a user may enter a desired load motion into a computer and/or other interface. The user may specify, for example, that the load is desired to move from point A to point B (such as points A and B of FIG. 1) and that the load is to rotate thirty degrees with respect to a specific axis.

In some embodiments the desired load behavior may be determined based upon one or more characteristics of the load. For example, the type of load may be associated with a particular destination. In other words, the desired behavior of moving the load from a first location to the associated destination may be determined based upon the type of load. For example, a manufacturing part such as a vehicle windshield may need to be moved to a particular assembly station where windshields are installed. The part may be marked, tagged, or otherwise identifiable as a windshield, and the intended destination/behavior may thus be determinable from the load itself. In some embodiments, the characteristic of a load may not need to be determined and/or may not be indicative of a desired behavior of a load.

Other characteristics of a load may also be indicative of and/or otherwise associated with one or more intended behaviors. In some embodiments for example, the load type may dictate translational and/or rotational speed and/or acceleration limits within which the load may safely be transported. The desired behavior of a load may therefore be express, implied, user-defined, inherent to a particular load or load type, and/or any combination thereof.

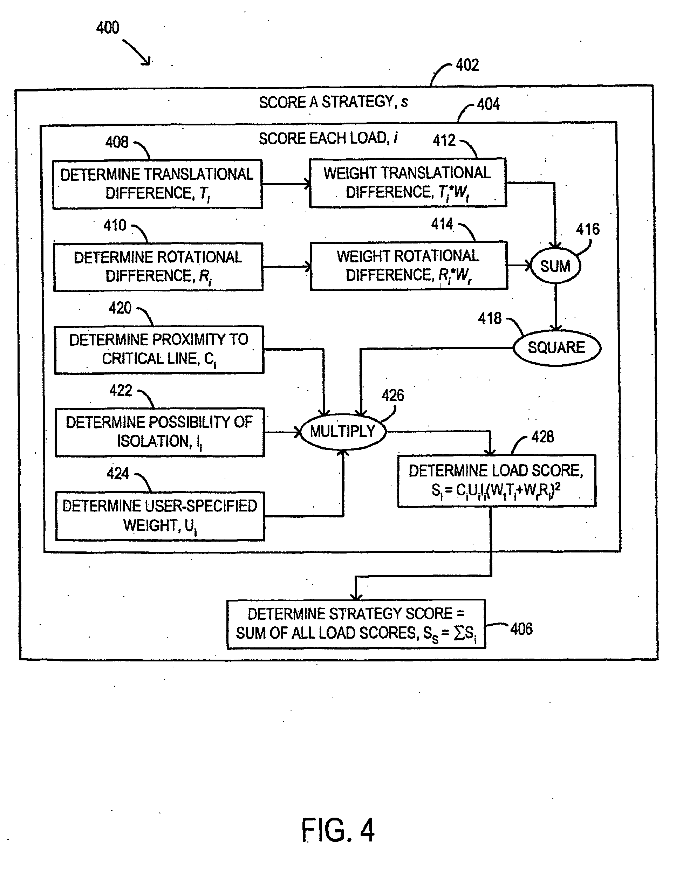

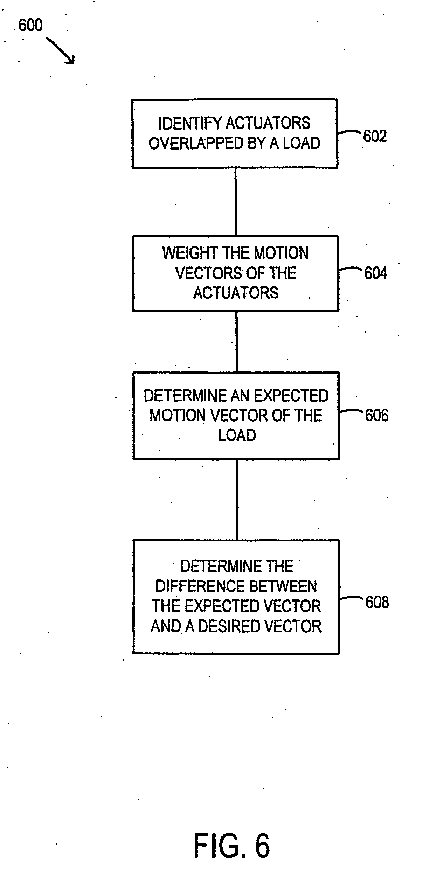

In some embodiments, the method 200 may continue at 204 by scoring a plurality of strategies for controlling the plurality of load actuators. The scoring at 204 may be conducted, for example, in accordance with the methods 400 and/or 600 described in conjunction with FIG. 4 and FIG. 6, respectively herein.

There may be many possible ways to control one or more actuators to cause a load to undertake a particular behavior. The combination of actuator commands, settings, and/or controls for a matrix of actuators may be referred to as a "strategy". Strategies may be scored based upon any criteria that is or becomes known or available. In some embodiments, a strategy may be scored based upon how close the strategy would come to moving an object in the manner desired (*e.g*., the score may represent a likelihood of success). Where a single load or object is desired to be moved, for example, any strategy that is capable of moving the object to the desired position may score very well. In the simple case of a single object, a variety of strategies may be capable of achieving the desired results (*i.e*., all of the strategies may have a similar likelihood of success). In some embodiments (such as the single object case), each of the strategies may be scored on other factors instead of or in addition to likelihood of success.

For example, while many strategies may be capable of moving an object from one point to another, some strategies may accomplish the task in a small amount of time, while others may take considerably longer. In some embodiments, the strategies may be scored, for example, at least partially based upon how quickly the strategy may result in successfully moving the object. According to some embodiments, strategies may be scored based upon whether the strategy would cause a load to be moved, rotated, and/or accelerated within the limits acceptable for the particular object. In some embodiments, strategies may be scored using a combination of scoring criteria (how successful, how quickly, within acceptable limits, etc.).

Where more than one object is desired to be moved (such as with loads 102a-c in FIG. 1), strategies may vary significantly in expected performance. In some embodiments, no strategy that is or becomes known or available may be capable of achieving the exact desired behavior. In such embodiments, strategies may be scored, for example, based upon how close they come to achieving the desired behavior. According to some embodiments, each strategy may cause each load to have an expected translational and/or rotational deviation from their desired behaviors. The score of a strategy may, for example, be or include (or otherwise take into account) either or both of these expected deviations. In some embodiments, one or more expected deviations may be determined (such as in method 600, for example). According to some embodiments, the expected deviations for each load in the load transportation system may be summed to determine a total expected deviation for a given strategy.

Examples of other factors that may be included in and/or affect a strategy's score may include, but are not limited to, load size, load priority, user-defined parameters, actuator and/or load limitations, and/or various relationships between two or more loads (*e.g*., certain types of loads may need to be maintained at certain minimum separation distances, etc.). Strategies may be scored in any practicable method and/or manner that is or becomes known, available, and/or is described herein. In some scoring schemes, for example, low scores may be associated with better performing strategies, while in other scoring schemes, higher scores may indicate more desirable performance.

In some embodiments, the method 200 may continue by selecting a strategy for controlling the plurality of load actuators based at least in part on a score associated with the strategy, at 206. The score associated with the strategy may be or include, for example, the score determined at 204. In some embodiments however, the score may not be determined by method 200. In other words, the scoring of strategies at 204 may be optional, and may not occur in some embodiments. For example, the scores associated with the strategies may be pre-determined and/or determined by a separate entity, device, and/or system. For ease of explanation, it will be assumed that the strategies are scored at 204 as described herein.

According to some embodiments, the strategy with the best score may be selected. For example, the strategies may be scored based directly on expected deviations for the desired load behavior. The lowest numeric score may therefore correspond to the strategy that would result in the smallest deviation. In some embodiments, this lowest-scoring strategy may be selected. According to some embodiments, other factors, scores, and/or variables may also or alternatively be considered in the selection of a strategy. For example, some loads (such as perishable loads, for example) may have a higher priority than others. The priority of loads may therefore be included in the scoring of the strategies (as described above) and/or may be considered as a separate factor in addition to strategy scores.

In some embodiments, one or more actuator control strategies may be selected, compiled, and/or otherwise determined in method 200. For example, the strategies to be scored at 204 may be determined by selecting desirable strategies from a database and/or lookup table of available strategies. According to some embodiments, one or more strategies may be created in method 200. Based on various information regarding the performance of known and/or scored strategies, for example, one or more new strategies may be created. In some embodiments, the new strategy may be designed to decrease the amount, magnitude, and/or type of deviation expected between the new strategy and desired load behaviors.

According to some embodiments, any selected actuator control strategy (such as the one selected at 206) may be applied and/or assigned to the matrix of load actuators. For example, the strategy with the best score may be selected and each (or any) of the load actuators may be controlled in accordance with the selected strategy. In some embodiments for example, the actuators may be set to certain speeds and/or directions as defined by the chosen strategy. The movement of loads may then be tracked to monitor the effectiveness of the strategy. In some embodiments, method 200 may be repeated at various intervals. Strategies may be re-scored and/or re-selected continually, intermittently, and/or otherwise, in an attempt, for example, to transport the loads as similarly to the desired behaviors as possible. In some embodiments, the strategies may be re-scored and/or re-selected whenever a new desired behavior is determined for one or more loads.

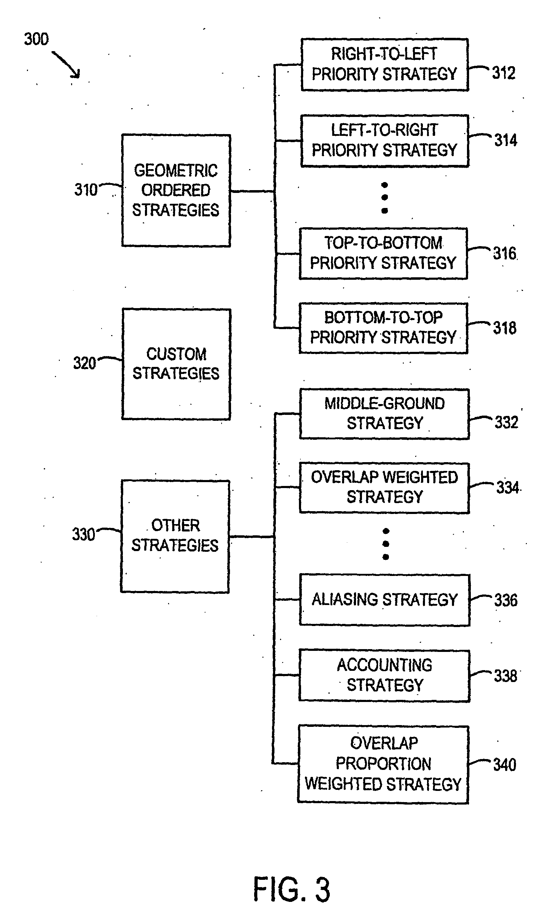

Turning now to FIG. 3 (with continued reference to FIG. 1), a block diagram of a plurality of example actuator control strategies 300 according to some embodiments is shown. The actuator control strategies 300 may, for example, be utilized in, scored, selected, and/or applied in accordance with the methods 200, 400, 600 described herein. In some embodiments, fewer or more strategies than those shown may be included in the plurality of strategies 300. For example, in some load transportation systems it may be known that only certain strategies are likely to produce desirable results. In other systems it may be desirable to consider all known or available strategies.

According to some embodiments, the strategies 300 may include geometric ordered strategies 310, custom strategies 320, and/or other strategies 330. The geometric ordered strategies 310 may include, but are not limited to, a right-to-left priority strategy 312, a left-to-right priority strategy 314, a top-to-bottom priority strategy 316, and/or a bottom-to-top priority strategy 318.

In the right-to-left priority strategy 312, for example, all loads desired to be transported (such as loads 102a-c) may be considered geometrically (e.g., in relation to one or more actuators, reference points or lines, and/or other system components) from right to left as they are positioned in the load transportation system (such as systems 100, 500). For example, in a right-to-left priority strategy 312 the loads 102a-c of system 100 may be considered starting with the right-most load 102c, then considering the next load 102b, and ending with the left-most load 102a. In some embodiments, any actuator that the currently considered load overlaps may be set to, assigned, and/or otherwise associated with a motion vector (speed and direction) such as the motion vector associated with the desired load behavior. For consecutively considered loads where an overlapping actuator has previously been assigned a vector (*i.e*., the actuator is overlapped by both the currently considered load and a previously considered load), the actuator may be reassigned a motion vector associated with the desired behavior for the current load.

In some embodiments, a multiple-overlapped actuator may not be assigned a new vector. For example, the priority of the loads may be considered in the decision regarding what setting the actuator should be assigned. In some embodiments, the actuator may be assigned a vector that is an average (or other computational, statistical, and/or mathematical function) of any competing vectors (similar to the middle-ground strategy 332 described below). According to some embodiments, actuators with no overlapping loads may be, for example, assigned no motion vector (e.g., remain and/or become idle) or assigned a motion vector associated with other surrounding, nearby, and/or desired motion vectors.

According to some embodiments, the other geometric ordered strategies 314, 316, 318 may be conducted similarly to the right-to-left strategy 312 described above, except that the order of considering loads would be as described in the name of each strategy. In some embodiments, other geometric ordered strategies 310 may also or alternatively be considered. For example, other strategies may be associated with diagonal and/or other coordinate directions, third dimensions, and/or may be combinations of any number of geometric ordered strategies 310 that are or become known or available.

In some embodiments, custom strategies 320 may be considered. Custom strategies 320 may include, for example, strategies tailored to particular actuator types, arrangements, and/or configurations. Custom strategies 320 may, in some embodiments, be designed specifically for a particular factory, warehouse, or other assembly line using a specific matrix of actuators. In some embodiments, custom strategies 320 may be or include combinations of other strategies such as any strategies that are or become known, available, and/or are described herein.

According to some embodiments, other strategies 330 that may not be geometrically ordered may be considered. Other strategies 330 may include, for example, a middle-ground strategy 332, an overlap weighted strategy 334, an aliasing strategy 336, an accounting strategy 338, and/or an overlap proportion weighted strategy 340. In some embodiments, all of these other strategies 330 may consider loads and/or actuators in any order (e. g., not geometrically). The middle-ground strategy 332, for example, may assign a motion vector such as the desired motion vector to any actuator that is overlapped by one load and/or by no loads. For actuators that are overlapped by more than one load, the actuator may be assigned, for example, a motion vector that is an average of the desired vectors for each of the overlapping loads. Other compromise settings for the actuator may be determined by taking into account, for example, the priority of the overlapping loads and/or other load or actuator factors.

In some embodiments, the overlap weighted strategy 334 may similarly assign any non-overlapped and/or singly-overlapped actuator a motion vector such as a preferred and/or desired motion vector (e. g., a motion vector associated with a desired behavior of an overlapping or nearby load). For actuators that are overlapped by more than one load, the actuator may be set, for example, to the desired motion vector associated with the load having the greatest overlap of the actuator. According to some embodiments, where two loads have the same or substantially the same overlap, a compromise between their desired vectors may be applied to the actuator (e. g., by using another strategy such as the middle-ground strategy 332 for the two or more similarly overlapping loads).

According to some embodiments, the aliasing strategy 336 may be or include a combination of the middle-ground strategy 332 and the overlap weighted strategy 334. For example, any actuators that are overlapped by one and/or no loads may be assigned a desired vector (or no vector, in the case of an actuator not being overlapped). Where two or more loads overlap an actuator, the average vector may be determined, for example, by weighting the respective desired load vectors by the amount of overlap associated with each respective overlapping load (like in the overlap weighted strategy 334), and then by averaging (like in the middle-ground strategy 332) the resulting weighted vectors.

In some embodiments, an accounting strategy 338 may be considered. For example, any non-overlapped and/or singly-overlapped actuator may be assigned an appropriate vector such as a desired vector. Each load may also be assigned an account which may, for example, be set at a value of zero. Where an actuator is overlapped by more than one load, the actuator may be assigned the vector associated with the load with the largest account. Where the overlapping loads have equal accounts (such as initially, when all loads may have accounts set at zero), a load may be chosen randomly and/or by other means. The account of any overlapping load that was not chosen may then be incremented. The process of the strategy may then be repeated, for example, each time giving priority to loads that were previously not necessarily moved in their desired directions (i.e., those with incrementally larger accounts).

According to some embodiments, other factors may be considered in various strategies. For example, the overlap proportion weighted strategy 340 may also consider all actuators in any order, and may also assign no-overlap and/or single-overlap actuators a desired motion vector (as in the other strategies described herein). The proportion weighted strategy 340 may, however, also take into account other factors such as load size. For example, where two or more loads overlap an actuator, the load with the greatest proportion of actuator overlap to total load size may be identified. In some embodiments, the actuator may then be assigned the desired vector associated with the identified load.

Other factors, variables, metrics, and/or criteria may similarly be used in various actuator control strategies. Indeed, large numbers of potential strategies are possible. Any number and/or combination of strategies may be utilized in carrying out the embodiments described herein. In some embodiments, one or more strategies may be pre-determined and/or identified prior to certain events. For example, strategies may be determined prior to scoring and/or selecting a strategy in accordance with method 200 herein. According to some embodiments, one or more strategies may be determined during and/or after certain events. For example, one or more strategies may be determined after a strategy has been scored and/or selected in accordance with method 200. In other words, strategies may be ad-hoc and/or determined on-the-fly utilizing, for example, information regarding previous strategy performances and/or current load positions, velocities, and/or directions.

In some embodiments, a chosen and/or applied strategy may require an actuator to be set to a specific speed and/or direction (a motion vector). In some systems and/or configurations however, an actuator may not be capable of performing exactly as required by the given strategy. In such conditions, the actuator may be set, for example, to speeds and/or directions similar and/or close to those specified by the strategy. In some embodiments it may not be possible for a strategy to require an unattainable setting for an actuator because the strategy may be limited to selecting settings within actuator constraints.

Referring now to FIG. 4, a flowchart of a method 400 according to some embodiments is shown. The method 400 may, according to some embodiments, begin by scoring an actuator control strategy, at 402. The method 400 (and/or scoring at 402) may, for example, be included as part of method 200 described herein. In particular, the scoring of an actuator control strategy at 402 may, according to some embodiments, be (or be similar to) the scoring at 204 described in conjunction with FIG. 2 above. In some embodiments, the method 400 may be associated with either or both of the systems 500 and 700 described herein. The method 400 may begin, for example, at 402 where an actuator control strategy ("s") may be scored. In some embodiments, the method 400 may be repeated to score each of a plurality of known or available actuator control strategies.

In some embodiments, the actuator control strategy ("*s*") may be scored by scoring each load ("*i*") of the load transportation system, at 404. The scores for all the loads ("*Sᵢ*") may then, for example, be summed at 406 to determine a score for the particular strategy being evaluated ("*Sₛ*"). According to some embodiments, the scores for various strategies may then be utilized to select an appropriate strategy to apply to the load actuators (such as in the selection of strategies at 206).

According to some embodiments, the scoring of each particular load ("*i*") at 404 may begin by determining, at 408, any translational difference ("*Tᵢ*") and/or, at 410, any rotational difference ("*Ri*") expected for the particular load ("*i*"). For example, the desired behavior of a load ("*i*") may include a desired destination and/or a desired rotational orientation. The expected destination and/or rotational orientation of the load using a particular strategy may, according to some embodiments, be predicted. The difference between the expected locations and/or rotational orientations may then be determined.

In some embodiments, these differences ("*Tᵢ*", *"Rᵢ")* may be converted to translational and/or rotational scores, respectively. The scores may, for example, be or include the actual differences ("*Tᵢ*", *"Rᵢ*") and/or may be representative and/or indicative of the differences (e.g., scored on a scale from one to ten). In some embodiments, both of the translational and rotational differences may be scored, determined, and/or considered as a single value, entity, metric, and/or criteria.

The method 400 may continue, for example, by weighting the translational difference ("*Tᵢ*") at 412 and/or by weighting the rotational difference ("*Rᵢ*") at 414. For example, each of the differences (*"Tᵢ", "Rᵢ"*) may be multiplied by a respective weighting factor ("*Wₜ", " Wᵣ").* The weighting factors (" *Wₜ*", *"Wᵣ")* may be entered and/or defined by a user and/or may be empirically determined for a particular load transportation system, matrix of actuators, and/or actuator. In some embodiments, the weighting factors (*"Wₜ",* "*Wᵣ*") may be at least partially determined based upon the ability of a particular actuator to correct errors in the respective kinds of motion (*i.e*., translational and/or rotational motions). According to some embodiments, a value for the translational weighting factor (" *Wₜ*") may be equal to or substantially equal to two times the value of the rotational weighting factor (" *Wᵣ").* Such a relationship between the weighting factors ("*Wₜ", "Wᵣ")* may indicate, for example, that it is approximately twice as difficult for an actuator to compensate for translational deviations as it is to compensate for rotational deviations.

In some embodiments, the method 400 may continue at 416 where the weighted differences are summed (" *Wₜ Tᵢ + Wᵣ Rᵢ"*)*.* The sum of the weighted differences ("*Wₜ Tᵢ*+*Wᵣ Rᵢ"*) may then, for example, be squared at 418 ("(*Wₜ Tᵢ* +*Wᵣ Rᵢ*)²")*.* In some embodiments, the squaring at 418 may, for example, cause larger deviations to be more heavily weighted. This may ultimately cause the scoring of various strategies to be similar to a 'least squares fit'. Such a fit may, for example, facilitate the ultimate selection of an appropriate strategy to apply to a given matrix of actuators.

The method 400 may continue by determining various factors associated with the load ("*i*"). For example, at 420, the proximity of the load to a critical line ("*Cᵢ*") may be determined. The critical line may be a line, for example, that represents the possibility that the load may reach the desired destination. Where individual actuators in a matrix of actuators are only capable of moving loads in certain directions (like forward, for example), one side of the critical line may indicate an area where the load may be able to reach the desired destination, while the other side of the line may represent an area in which the load may not be able to reach the desired destination.

In other words, once the load passes the desired destination, if the actuators are not capable of reverse movement, the load will not be able to reach the destination. Therefore, in some embodiments, it may be important to ensure that loads are kept away from critical lines. The closer a load is moved to a critical line using the current strategy, for example, the higher the proximity to the critical line factor ("*Cᵢ*") may be. In some embodiments for example, the critical line factor ("*Cᵢ*") may be expressed in terms of a probability (e.g., a factor of eighty percent representing an eighty percent chance that the load will reach the critical line). According to some embodiments, the critical line factor ("*Cᵢ*") may be expressed in terms of the shortest distance between the load and the critical line.

At 422, the possibility of a load becoming isolated from other loads ("*Iᵢ*") may be determined. The load may, for example, be associated with one or more other loads. In some embodiments, these loads may be or include a load set, group, or collection (such as a load consisting of a collection of vehicle windshields). It may be desirable to keep any associated loads, such as loads belonging to the same collection, together. In some embodiments, the possibility of isolation factor ("*Iᵢ*") increases the closer a load is to being isolated from other loads (like loads of the same collection) using the current strategy.

According to some embodiments however, it may be desirable that a particular load become and/or remain isolated from other loads. Volatile, reactive, fragile, and/or otherwise desirably isolated loads may, for example, need to be kept away from other loads and/or other load types. In some embodiments therefore, the possibility of isolation factor ("*Iᵢ*") increases the closer a load is to other loads. In other words, if the load is far from being isolated from other loads, the higher the possibility of isolation factor ("*Iᵢ*") may be for that load using the current strategy. The possibility of isolation factor ("*Iᵢ*") may be expressed in any terms, and/or metrics such as, for example, probabilities, distances, and/or ranks.

In some embodiments, a user may define a priority or weight ("*Uᵢ")* to be applied to a given load and/or collection of loads. For example, a user, operator, and/or programmer may desire to expedite the transportation of a particular load and/or load type. The user may use any interface that is or becomes known or available to enter, reference, and/or otherwise define the desired priority or weight ("*Ui*") to be assigned to the load. At 424, this user-specified weight ("*Uᵢ*") may, according to some embodiments, be determined. The user-specified weight ("*Uᵢ*") may be expressed in any terms, and/or metrics such as, for example, probabilities, scores, and/or ranks.

The method 400 may continue, for example, at 426 by multiplying various load factors. As shown in FIG. 4, the squared sum of the weighted differences ("(*Wₜ Tᵢ+Wᵣ Rᵢ*)*²"),* the proximity to the critical line factor ("*Cᵢ*"), the possibility of isolation factor ("*Iᵢ*"), and the user-specified weight ("*Uᵢ*") may all be multiplied at 426 (*CᵢIᵢUᵢ*(*Wₜ Tᵢ + Wᵣ Rᵢ*)²*"*)*.* In some embodiments, fewer or more factors than those shown in FIG. 4 may be included in the calculation at 426. According to some embodiments, the calculation at 426 may be or include an addition and/or other mathematical operation instead of or in addition to the multiplicative operation shown.

According to some embodiments, the calculation at 426 may directly result in a score for a particular load ("*Sᵢ*"), at 428. In some embodiments, the score for the load ("*Sᵢ*") may be determined at 428 based on or at least partially based on the calculation at 426. For example, the product realized at 426 may be converted to a load score ("*Sᵢ*") at 428. In some embodiments, the product from 426 may be looked up in a table and/or database to determine an associated score for the load ("*Sᵢ*"). Other operations, functions, and/or procedures may be used at 428 to produce a load score ("*Sᵢ*") based at least partially upon the resulting value(s) from 426. As described above, in some embodiments the scores for some or all loads ("*Sᵢ*") may then be summed at 406 to determine a score for the strategy ("*s*") being evaluated. In some embodiments, other factors and/or functions may be included and/or performed in the determination of the strategy score ("*Sₛ*") at 406. The method 400 may also be repeated for any or all of a plurality of strategies. In some embodiments, one or more strategies may be scored using different procedures as may be appropriate to effectively compare the various strategies.

Turning now to FIG. 5, a block diagram of a system 500 for transporting loads according to some embodiments is shown. The system may be associated with and/or carry out, for example, methods 200, 400, 600 described herein. The system 500 may include a load 102 and a matrix of actuators 104. The matrix of actuators 104 may include various actuators such as the actuators 104a-d overlapped by the load 102. Either or both of the load 102 and the matrix of actuators 104 may be or be similar to those like-numbered items as described in conjunction with FIG. 1 herein. In some embodiments, other quantities and/or configurations of either or both of the load 102 and the actuators 104 may be used, and different types, layouts, quantities, and configurations of systems may be used, without deviating from the scope and/or purpose of some embodiments.

FIG. 5 shows a load 102 that overlaps four conveyor-belt actuators 104a-d. Each actuator 104a-d is shown with a respective motion vector 510a- d. The motion vectors 510 a-d may be or include, for example, the motion vectors as described in conjunction with methods 200,400, 600 herein. For illustrative purposes, the motion vector 510a associated with the lower-right actuator 104a is also shown broken down into coordinate vector components 512a, 514a. The coordinate vector components 512a, 514a may be, for example, the x-axis 106 and y-axis 108 components 512a, 514a of the vector 510a, respectively. Those skilled in the art will be familiar with methods and/or procedures for breaking a vector into such components. The other motion vectors 510b-d may also be broken down into similar components (not shown).

Also shown in FIG. 5 are areas of overlap 520a-d. The areas of overlap, as described previously herein, may represent the contact areas between the load 102 and an actuator 104a-d. For example, the area of overlap 520a may be defined as the contacting surface area between the load 102 and the lower-right actuator 104a.

Referring now to FIG. 6 (and with continuing reference to FIG. 5 above), a method 600 for determining the differences between expected load behaviors and desired load behaviors will be described. The method 600 may begin, according to some embodiments, by identifying any actuators overlapped by a specific load, at 602. Where the specific load is the load 102 of system 500, for example, the identified actuators may be the actuators 104a-d. The motion vectors of the actuators 510a-d may be, for example, motion vectors determined by a particular actuator control strategy (such as the strategies 300 described herein).

At 604, the motion vector for each identified actuator may be weighted.

In some embodiments, the vectors may be weighted by multiplying each vector by their respective areas of load overlap. For example, the motion vector 510a for actuator 104a may be weighted by multiplying the vector 510a with the area of overlap 520a. Similar calculations may be performed for each of the remaining overlapped actuators 104b-d. According to some embodiments, other factors in addition to or in place of overlap area may be included in the weighting of the motion vectors 510a-d.

In some embodiments, the method 600 may continue at 606 by determining an expected motion vector 530 for the current load. For example, determining an expected motion vector 530 may include summing the coordinate components (*e.g*., 512a, 514a) of the weighted vectors. The summed coordinate components may then, according to some embodiments, be converted back into a single resulting motion vector. The single resulting motion vector may be, for example, an expected motion vector 530 for the current load. In some embodiments, other factors such as factors of safety and/or correction factors may be utilized in the calculation of the expected motion vector 530.

At 608, the difference between the expected motion vector 530 and a desired motion vector for the load may be determined. In some embodiments, the coordinate components of the expected and desired vectors may be summed to produce a differential vector. In some embodiments, the differential vector may then be used to score and/or select strategies to be applied to a matrix of load actuators. According to some embodiments, the differential vector may be used to calculate and/or otherwise determine an expected deviation of the load from a desired position of the load. For example, the differential vector may be multiplied by a unit of time to determine an expected location deviation of the load at a particular time. The location deviation and/or deviant position of the load may be utilized, in some embodiments, to determine various factors such as the proximity to the critical line factor ("*Cᵢ*") and/or the possibility of isolation factor ("*Iᵢ*").

Referring now to FIG. 7, a block diagram of a system 700 for mapping load motion vectors to actuator commands according to some embodiments is depicted for use in explanation, but not limitation, of described embodiments. Upon reading this disclosure, those skilled in the art will appreciate that different types, layouts, quantities, and configurations of systems may be used.

In some embodiments, the system 700 may be or include a computer such as a computer server. The server 700 may include one or more processors 702, which may be any type or configuration of processor, microprocessor, and/or micro-engine that is or becomes known or available. In some embodiments, the server 700 may also include one or more communication interfaces 704, an output device 706, an input device 708, and/or a memory device 710, all and/or any of which may be in communication with the processor 702.

The communication interface 704 may be or include any type and/or configuration of communication device that is or becomes known or available. In some embodiments, the communication device 704 may allow the system 700 (and/or the processor 702) to communicate with, for example, a load transportation system such as systems 100, 500 and/or with a matrix of actuators such as the matrix 104 described herein. In some embodiments, the processor 702 may send signals to the matrix of actuators and/or any of the various individual actuators. The output device 706 and the input device 708 may be or include one or more conventional devices such as displays, printers, keyboards, a mouse, a trackball, etc. The devices 706, 708 may be utilized, for example, by an operator and/or system user to control a matrix of actuators and/or to map motion vectors to the matrix of actuators.

The memory device 710 may be or include, according to some embodiments, one or more magnetic storage devices, such as hard disks, one or more optical storage devices, and/or solid state storage. The memory device 710 may store, for example, applications, programs, procedures, and/or modules 712, 714, by which the server 700 may map motion vectors to actuator control strategies in accordance with methods described herein. The strategy scoring module 712, for example, may be a program for scoring actuator control strategies. In some embodiments, the strategy scoring module 712 may process and/or implement, for example, the scoring at 204 and/or the method 400 as described herein. The strategy selection module 714 may, according to some embodiments, select one or more strategies to apply to a matrix of actuators. The strategy selection module 714 may, for example, process and/or implement the selection at 206 as described in conjunction with FIG. 2 herein.

The several embodiments described herein are solely for the purpose of illustration. Persons skilled in the art will recognize from this description that other embodiments may be practiced with modifications and alterations limited only by the claims.

## Claims

1. A load transportation system including a processor (702), a plurality of load actuators (104) and a storage medium (710) having stored therein instructions (712, 714) that when executed by said system result in determining (202) a desired behavior for one or more loads (102), the one or more loads (102) being moveable by said plurality of load actuators (104), said system **characterized by**:
said instructions selecting (206) a strategy from among a plurality of strategies (300), each of said plurality of strategies for controlling said plurality of load actuators (104) based at least in part on a score associated with the strategy, wherein said instructions apply said selected strategy to control the motion of said one or more loads (102) by said plurality of load actuators (104).

2. The system of claim 1, wherein the plurality of load actuators (104) are arranged in a substantially planar matrix, and wherein said instructions score said strategy based upon how close said strategy would come to moving an object on the manner desired .

3. The system of claim 1 or 2, wherein said score associated with the selected strategy is determined by scoring each load of the system and summing the scores for each load of the system.

4. A method for controlling one or more load (102) in a load transportation system, said method including determining (202) a desired behavior for one or more loads (102), the one or more loads (102) being moveable by a plurality of load actuators (104), said method **characterized by** steps of:
scoring (204) each of a plurality of strategies for controlling the motion of the plurality of load actuators (104); and
selecting (206) a strategy among said plurality of strategies (300) for controlling said plurality of load actuators (104) based at least in part on a score associated with the selected strategy.

5. The method of claim 4, wherein the plurality of load actuators (104) are arranged in a substantially planar matrix, and wherein said step of scoring (204) a strategy (300) includes identifying any load actuators overlapped by a specific load, weighting motion vectors for each identified load actuators, determining an expected motion vector for the specific load, determining the difference between the expected motion vector and a desired motion vector for the specific load to produce a differential vector, and using the differential vector to score the strategy.

6. The method of claim 4 or 5, wherein said step of scoring (204) a strategy (300) comprises the steps of:
predicting a translational and a rotational motion vector of one or more loads that would result from implementation of the strategy;
determining a translational difference between the predicted translational motion vector and a desired translational motion vector, and a rotational difference between the predicted rotational motion vector and a desired rotational motion vector; and
determining an expected deviation of the one or more loads by:
multiplying the translational difference by a translational weighting factor;
multiplying the rotational difference by a rotational weighting factor; and
summing the products.

7. The method of claim 6, further comprising:
squaring the expected deviation of the one or more loads.

8. The method of claim 6, further comprising:
weighting the expected deviation by a priority factor associated with the one or more loads.

9. The method of claim 8, wherein the priority factor associated with the one or more loads is the product of (i) a priority assigned by a user, (ii) a proximity of the one or more loads to a critical zone, and (iii) a factor associated with the isolation of the one or more loads from other loads.

10. The method of claim 6, further comprising:
summing the weighted expected deviations for each load in the plurality of loads.

11. A storage medium with instructions stored thereon that, when executed by a machine, perform a method according to one of claims 4 to 10.

## Patentansprüche

1. Lasttransportsystem, das einen Prozessor (702), mehrere Lastaktoren (104) und ein Speichermedium (710), in dem Anweisungen (712, 714) gespeichert sind, die dann, wenn sie durch das System ausgeführt werden, zur Folge haben, dass ein erwünschtes Verhalten für eine oder mehrere Lasten (102) bestimmt wird (202), umfasst, wobei die eine oder die mehreren Lasten (102) durch die mehreren Lastaktoren (104) beweglich sind, wobei das System **dadurch gekennzeichnet ist, dass**:
die Anweisungen eine Strategie aus mehreren Strategien (300) auswählen (206), wobei jede der mehreren Strategien die mehreren Lastaktoren (104) wenigstens teilweise anhand einer der Strategie zugeordneten Bewertung steuert, wobei die Anweisungen die ausgewählte Strategie auf die Steuerung der Bewegung der einen oder der mehreren Lasten (102) durch die mehreren Lastaktoren (104) anwenden.

2. System nach Anspruch 1, wobei die mehreren Lastaktoren (104) in einer im Wesentlichen ebenen Matrix angeordnet sind und wobei die Anweisungen die Strategie anhand der Tatsache bewerten, wie nahe die Strategie der Bewegung eines Gegenstands auf die erwünschte Weise kommt.

3. System nach Anspruch 1 oder 2, wobei die der ausgewählten Strategie zugeordnete Bewertung durch Bewerten jeder Last des Systems und durch Summieren der Bewertungen für jede Last des Systems bestimmt wird.

4. Verfahren zum Steuern einer oder mehrerer Lasten (102) in einem Lasttransportsystem, wobei das Verfahren das Bestimmen (202) eines erwünschten Verhaltens für eine oder mehrere Lasten (102) umfasst, wobei die eine oder die mehreren Lasten (102) durch mehrere Lastaktoren (104) beweglich sind, wobei das Verfahren **gekennzeichnet ist durch** die folgenden Schritte:
Bewerten (204) jeder von mehreren Strategien zum Steuern der Bewegung der mehreren Lastaktoren (104); und
Auswählen (206) einer Strategie unter den mehreren Strategien (300), um die mehreren Lastaktoren (104) wenigstens teilweise anhand einer der ausgewählten Strategie zugeordneten Bewertung zu steuern.

5. Verfahren nach Anspruch 4, wobei die mehreren Lastaktoren (104) in einer im Wesentlichen ebenen Matrix angeordnet sind und wobei der Schritt des Bewertens (204) einer Strategie (300) das Identifizieren irgendwelcher Lastaktoren, mit denen eine spezifische Last überlappt, das Gewichten von Bewegungsvektoren für jeden identifizierten Lastaktor, das Bestimmen eines erwarteten Bewegungsvektors für die spezifische Last, das Bestimmen der Differenz zwischen dem erwarteten Bewegungsvektor und einem erwünschten Bewegungsvektor für die spezifische Last, um einen differentiellen Vektor zu erzeugen, und das Verwenden des differentiellen Vektors, um die Strategie zu bewerten, umfasst.

6. Verfahren nach Anspruch 4 oder 5, wobei der Schritt des Bewertens (204) einer Strategie (300) die folgenden Schritte umfasst:
Vorhersagen eines translatorischen und eines rotatorischen Bewegungsvektors einer oder mehrerer Lasten, die sich aus der Implementierung der Strategie ergäben;
Bestimmen einer translatorischen Differenz zwischen dem vorhergesagten translatorischen Bewegungsvektor und einem erwünschten translatorischen Bewegungsvektor und einer rotatorischen Differenz zwischen dem vorhergesagten rotatorischen Bewegungsvektor und einem erwünschten rotatorischen Bewegungsvektor; und
Bestimmen einer erwarteten Abweichung der einen oder der mehreren Lasten durch:
Multiplizieren der translatorischen Differenz mit einem translatorischen Gewichtungsfaktor;
Multiplizieren der rotatorischen Differenz mit einem rotatorischen Gewichtungsfaktor; und
Summieren der Produkte.

7. Verfahren nach Anspruch 6, das ferner Folgendes umfasst:
Quadrieren der erwarteten Abweichung der einen oder der mehreren Lasten.

8. Verfahren nach Anspruch 6, das ferner Folgendes umfasst:
Gewichten der erwarteten Abweichung mit einem Prioritätsfaktor, der der einen oder den mehreren Lasten zugeordnet ist.

9. Verfahren nach Anspruch 8, wobei der Prioritätsfaktor, der der einen oder den mehreren Lasten zugeordnet ist, das Produkt aus (i) einer durch einen Anwender zugewiesenen Priorität, (ii) einer Nähe der einen oder der mehreren Lasten zu einer kritischen Zone und (iii) einem Faktor, der der Isolation der einen oder der mehreren Lasten von anderen Lasten zugeordnet ist, ist.

10. Verfahren nach Anspruch 6, das ferner Folgendes umfasst:
Summieren der gewichteten erwarteten Abweichungen für jede Last in den mehreren Lasten.

11. Speichermedium mit Anweisungen, die darin gespeichert sind und die dann, wenn sie von einer Maschine ausgeführt werden, ein Verfahren nach einem der Ansprüche 4 bis 10 ausführen.

## Revendications

1. Système de transport de charges, comportant un processeur (702), une pluralité d'actionneurs (104) de charges et un support d'enregistrement (710) sur lequel sont enregistrées des instructions (712, 714) qui, une fois exécutées par ledit système, permettent d'établir (202) un comportement souhaité d'une ou de plusieurs charges (102), la ou les charges (102) étant aptes à être déplacées par ladite pluralité d'actionneurs (104) de charges, ledit système étant **caractérisé en ce que** :
lesdites instructions permettent de sélectionner (206) une stratégie parmi une pluralité de stratégies (300), chacune de ladite pluralité de stratégies permettant de commander ladite pluralité d'actionneurs (104) de charges en fonction en partie au moins d'un score associé à la stratégie, lesquelles instructions appliquent ladite stratégie sélectionnée pour commander le déplacement de ladite ou desdites charges (102) au moyen de ladite pluralité d'actionneurs (104) de charges.

2. Système selon la revendication 1, laquelle pluralité d'actionneurs (104) de charges étant agencés selon une matrice sensiblement plane, et lesquelles instructions attribuent un score à ladite stratégie en fonction de son aptitude plus ou moins grande à déplacer un objet de la manière souhaitée.

3. Système selon la revendication 1 ou 2, lequel score associé à la stratégie sélectionnée est établi en attribuant un score à chaque charge du système et en additionnant les scores pour chaque charge du système.

4. Procédé de commande d'une ou de plusieurs charges (102) dans un système de transport de charges, ledit procédé comprenant l'étape consistant à établir (202) un comportement souhaité d'une ou de plusieurs charges (102), la ou les charges (102) étant aptes à être déplacées par une pluralité d'actionneurs (104) de charges, ledit procédé étant **caractérisé en ce qu'**il comprend les étapes consistant à :
attribuer un score (204) à chacune d'une pluralité de stratégies permettant de commander le déplacement de la pluralité d'actionneurs (104) de charges ; et
sélectionner (206) une stratégie parmi ladite pluralité de stratégies (300) permettant de commander ladite pluralité d'actionneurs (104) de charges en fonction en partie au moins d'un score associé à la stratégie sélectionnée.

5. Procédé selon la revendication 4, laquelle pluralité d'actionneurs (104) de charges étant agencés selon une matrice sensiblement plane, et laquelle étape consistant à attribuer un score (204) à une stratégie (300) comprend les étapes consistant à identifier d'éventuels actionneurs de charges sur lesquels empiète une charge particulière, pondérer des vecteurs de mouvement pour chacun des actionneurs de charges identifiés, établir un vecteur de mouvement escompté pour la charge particulière, établir la différence entre le vecteur de mouvement escompté et un vecteur de mouvement souhaité pour la charge particulière afin de produire un vecteur différentiel, et utiliser le vecteur différentiel pour attribuer un score à la stratégie.

6. Procédé selon la revendication 4 ou 5, laquelle étape consistant à attribuer un score (204) à une stratégie (300) comprend les étapes consistant à :
prédire un vecteur de mouvement de translation et un vecteur de mouvement de rotation d'une ou de plusieurs charges qui découleraient de la mise en oeuvre de la stratégie ;
établir une différence de translation entre le vecteur de mouvement de translation prédit et un vecteur de mouvement de translation souhaité, et une différence de rotation entre le vecteur de mouvement de rotation prédit et un vecteur de mouvement de rotation souhaité ; et
établir un écart escompté de la ou des charges en exécutant les étapes consistant à :
multiplier la différence de translation par un facteur de pondération de translation ;
multiplier la différence de rotation par un facteur de pondération de rotation ; et
additionner les produits.

7. Procédé selon la revendication 6, comprenant en outre l'étape consistant à :
élever au carré l'écart escompté de la ou des charges.

8. Procédé selon la revendication 6, comprenant en outre l'étape consistant à :
pondérer l'écart escompté par un facteur de priorité associé à la ou aux charges.

9. Procédé selon la revendication 8, lequel facteur de priorité associé à la ou aux charges est égal au produit de (i) une priorité attribuée par un utilisateur, (ii) une proximité de la ou des charges vis-à-vis d'une zone critique, et (iii) un facteur associé à l'isolation de la ou des charges par rapport à d'autres charges.

10. Procédé selon la revendication 6, comprenant en outre l'étape consistant à :
additionner les écarts escomptés pondérés pour chaque charge dans la pluralité de charges.

11. Support d'enregistrement sur lequel sont enregistrées des instructions qui, une fois exécutées par une machine, mettent en oeuvre un procédé selon l'une des revendications 4 à 10.
